# EUROPEAN PATENT APPLICATION

(11) **EP 4 596 474 A1**
(43) Date of publication of application: **06.08.2025**
(21) Application number: 24850537.2
(22) Date of filing: 28.03.2024
(51) Int. Cl.: B65H 23/032, H01M 4/04, B65H 26/00, B05C 11/00, G01B 11/14, G05B 19/418

(54) **METHOD AND DEVICE FOR COATING DEVIATION CORRECTION**

(30) Priority: 07.08.2023 CN 202310985460
(71) Applicant: Contemporary Amperex Technology Co., Limited, Ningde, Fujian 352100 (CN)
(72) Inventor: HU, Liangjin, Ningde, Fujian 352100 (CN); MA, Lin, Ningde, Fujian 352100 (CN); WANG, Xi, Ningde, Fujian 352100 (CN)
(74) Representative: Ran, Handong
(86) International application number: PCT/CN2024/084518
(87) International publication number: WO 2025/030880

(57) **Abstract**

A method for coating deviation correction, comprising: acquiring a first distance and a second distance, wherein the first distance is a distance from the edge of a coating area on a first surface of an electrode sheet substrate to a reference edge, and the second distance is a distance from the edge of a coating area on a second surface of the electrode sheet substrate to the reference edge; and determining a target deviation correction amount in the coating process on the basis of the first distance, the second distance, and at least one preset deviation correction amount. According to the method, the target deviation correction amount can be determined with high efficiency and accuracy. Also disclosed are a device for coating deviation correction and a computer readable storage medium.

## Description

### CROSS-REFERENCE TO RELATED APPLICATIONS

This application claims priority to Chinese Patent Application No. 202310985460.3, filed on August 7, 2023 and entitled "COATING DEVIATION CORRECTION METHOD AND APPARATUS", which is incorporated herein by reference in its entirety.

### TECHNICAL FIELD

This application relates to the technical field of battery manufacturing, and in particular, to a coating deviation correction method and apparatus.

### BACKGROUND

Energy conservation and emission reduction are crucial to the sustainable development of the automobile industry. In this context, electric vehicles, with their advantages in energy conservation and environmental protection, have become an important part of the sustainable development of the automobile industry. For electric vehicles, battery technology is an important factor in connection with their development.

The production process of batteries is relatively complex, involving a plurality of procedures. Among these procedures, for example, a coating procedure is an indispensable part, and the influence of the coating procedure on battery performance is crucial.

### SUMMARY

Embodiments of this application provide a coating deviation correction method and apparatus, capable of effectively improving battery performance.

According to a first aspect, a coating deviation correction method is provided, where the method includes: acquiring a first distance and a second distance, where the first distance is a distance from an edge of a coating region on a first surface of an electrode plate substrate to a reference edge, and the second distance is a distance from an edge of a coating region on a second surface of the electrode plate substrate to the reference edge; and determining a target deviation correction amount in a coating process based on the first distance, the second distance, and at least one preset deviation correction amount.

In this embodiment of this application, the distances from the edges of the coating regions on the two corresponding surfaces of the electrode plate substrate to the reference edge can be acquired to determine a coating misalignment size between the two corresponding surfaces, and then the target deviation correction amount in the coating process is determined based on the preset deviation correction amount, so that the target deviation correction amount is determined with high efficiency and accuracy. Deviation correction is performed based on the target deviation correction amount, so that the coating misalignment size between the two corresponding surfaces falls within a specification range, thereby effectively improving battery performance.

In some possible implementations, the determining a target deviation correction amount in a coating process based on the first distance, the second distance, and the at least one preset deviation correction amount includes: determining a first misalignment value set based on the first distance and the second distance, where the first misalignment value set includes, in a width direction of the electrode plate substrate, at least one first misalignment value between an edge of a coating region on the first surface and an edge of a coating region on the corresponding second surface; and determining the target deviation correction amount based on the first misalignment value and the at least one preset deviation correction amount.

In the above technical solution, determining the misalignment value between the two corresponding surfaces based on the first distance and the second distance is simple to implement and effectively reduces implementation complexity. Furthermore, determining a target deviation correction amount based on the misalignment value between the two corresponding surfaces and a preset deviation correction amount enables determination of the target deviation correction amount with higher efficiency and accuracy. Performing deviation correction based on the target deviation correction amount ensures that the coating misalignment size between the two corresponding surfaces falls within a specification range, thereby effectively improving the battery performance.

In some possible implementations, the determining the target deviation correction amount based on the first misalignment value and the at least one preset deviation correction amount includes: performing initial deviation correction on the first misalignment value sequentially using the at least one preset deviation correction amount to obtain at least one second misalignment value set, where each of the at least one second misalignment value set is a misalignment value set obtained after performing initial deviation correction on the first misalignment value using a same preset deviation correction amount, and the number of the at least one second misalignment value set is equal to the number of the at least one preset deviation correction amount; and determining the target deviation correction amount based on the at least one second misalignment value set, the at least one preset deviation correction amount, and the first misalignment value.

In the above technical solution, initial deviation correction is first performed on the misalignment value between the two corresponding surfaces using the preset deviation correction amount and then a final target deviation correction amount is determined based on a result of the initial deviation correction. This helps to eliminate inappropriate preset deviation correction amounts, reducing a computational effort required to determine the target deviation correction amount and thus improving the efficiency of determining the target deviation correction amount and performing deviation correction.

In some possible implementations, each of the at least one second misalignment value set includes at least one second misalignment value, and determining the target deviation correction amount based on the at least one second misalignment value set, the at least one preset deviation correction amount, and the first misalignment value includes: selecting a second misalignment value with a maximum absolute value from each of the at least one second misalignment value set; determining a second target misalignment value, where the second target misalignment value is a misalignment value less than a first target misalignment value among at least one second misalignment value with a maximum absolute value, and the first target misalignment value is a misalignment value with a maximum absolute value in the first misalignment value set; and determining the target deviation correction amount based on a first preset deviation correction amount among the at least one preset deviation correction amount, where the first preset deviation correction amount includes a preset deviation correction amount corresponding to the second target misalignment value.

In a deviation correction process, if an absolute value of a misalignment value after deviation correction using a certain deviation correction amount is greater than that before deviation correction, meaning that deviation increases, that deviation correction amount is inappropriate. Therefore, in the above technical solution, a misalignment value with an absolute value less than the misalignment value before deviation correction is selected from misalignment values after initial deviation correction and a target deviation correction amount is determined based on a deviation correction amount corresponding to the selected misalignment value, that is, an inappropriate deviation correction amount is abandoned. This not only reduces a possibility of increasing deviation but also potentially reduces the number of appropriate deviation correction amounts selected compared to an initially preset number, thereby effectively reducing time for determining the target deviation correction amount and improving the efficiency.

In some possible implementations, in a case that there are a plurality of first preset deviation correction amounts, determining the target deviation correction amount based on a first preset deviation correction amount among the at least one preset deviation correction amount includes: selecting, from the second misalignment value set, a misalignment value set obtained after performing initial deviation correction on the first misalignment value using the first preset deviation correction amount to obtain at least one second target misalignment value set; and determining the target deviation correction amount based on second misalignment values included in each of the at least one second target misalignment value set.

In the above technical solution, the determining the target deviation correction amount based on corrected misalignment values obtained after performing initial deviation correction on the misalignment value between the two surfaces using an appropriate deviation correction amount significantly improves accuracy of the determined target deviation correction amount.

In some possible implementations, the determining the target deviation correction amount based on second misalignment values included in each of the at least one second target misalignment value set includes: adding the second misalignment values included in each second target misalignment value set to obtain at least one sum of misalignment values; and determining a first preset deviation correction amount corresponding to a sum of misalignment values with a minimum absolute value among the at least one sum of misalignment values as the target deviation correction amount.

In the above technical solution, according to a rule that a corrected value approaches 0, meaning that a smaller sum is better, a preset deviation correction amount corresponding to a sum of misalignment values with a minimum absolute value among the sums of misalignment values is determined as a target deviation correction amount, allowing for high accuracy of the determined target deviation correction amount, and achieving a better effect after deviation correction performed based on the target deviation correction amount, thereby further improving the battery performance.

In some possible implementations, in a case that there is one first preset deviation correction amount, determining the target deviation correction amount based on a first preset deviation correction amount among the at least one preset deviation correction amount includes: determining the first preset deviation correction amount as the target deviation correction amount.

In the above technical solution, in the case that there is one first preset deviation correction amount, determining the first preset deviation correction amount as the target deviation correction amount not only significantly reduces computational complexity but also allows for high accuracy of the determined target deviation correction amount.

In some possible implementations, the at least one preset deviation correction amount includes at least one of the following deviation correction amounts: -0.1 mm, 0.1 mm, -0.2 mm, 0.2 mm, -0.3 mm, 0.3 mm, -0.4 mm, 0.4 mm, -0.5 mm, and 0.5 mm.

In the above technical solution, setting the at least one preset deviation correction amount to at least one of -0.1 mm, 0.1 mm, -0.2 mm, 0.2 mm, -0.3 mm, 0.3 mm, -0.4 mm, 0.4 mm, -0.5 mm, and 0.5 mm ensures that coating misalignment between A and B surfaces can be corrected to be within a specification range, also meets a deviation correction precision of a deviation correction mechanism, and reduces a possibility of breakage of the electrode plate substrate.

According to a second aspect, a coating deviation correction apparatus is provided, including: an acquisition unit configured to acquire a first distance and a second distance, where the first distance is a distance from an edge of a coating region on a first surface of an electrode plate substrate to a reference edge, and the second distance is a distance from an edge of a coating region on a second surface of the electrode plate substrate to the reference edge; and a determination unit configured to determine a target deviation correction amount in a coating process based on the first distance, the second distance, and at least one preset deviation correction amount.

In some possible implementations, the determination unit is specifically configured to: determine a first misalignment value set based on the first distance and the second distance, where the first misalignment value set includes, in a width direction of the electrode plate substrate, at least one first misalignment value between the edge of the coating region on the first surface and the edge of the coating region on the corresponding second surface; and determine the target deviation correction amount based on the first misalignment value and the at least one preset deviation correction amount.

In some possible implementations, the apparatus further includes: a deviation correction unit configured to perform initial deviation correction on the first misalignment value sequentially using the at least one preset deviation correction amount to obtain at least one second misalignment value set, where each of the at least one second misalignment value set is a misalignment value set obtained after performing initial deviation correction on the first misalignment value using a same preset deviation correction amount, and the number of the at least one second misalignment value set is equal to the number of the at least one preset deviation correction amount. The determination unit is specifically configured to: determine the target deviation correction amount based on the at least one second misalignment value set, the at least one preset deviation correction amount, and the first misalignment value.

In some possible implementations, each of the at least one second misalignment value set includes at least one second misalignment value, and the apparatus further includes: a selection unit configured to select a second misalignment value with a maximum absolute value from each of the at least one second misalignment value set; and the determination unit is specifically configured to: determine a second target misalignment value, where the second target misalignment value is a misalignment value less than a first target misalignment value among at least one second misalignment value with a maximum absolute value, and the first target misalignment value is a misalignment value with a maximum absolute value in the first misalignment value set; and determine the target deviation correction amount based on a first preset deviation correction amount among the at least one preset deviation correction amount, where the first preset deviation correction amount includes a preset deviation correction amount corresponding to the second target misalignment value.

In some possible implementations, in a case that there are a plurality of first preset deviation correction amounts, the selection unit is specifically configured to: select, from the second misalignment value set, a misalignment value set obtained after performing initial deviation correction on the first misalignment value using the first preset deviation correction amount to obtain at least one second target misalignment value set; and the determination unit is specifically configured to: determine the target deviation correction amount based on second misalignment values included in each of the at least one second target misalignment value set.

In some possible implementations, the determination unit is specifically configured to: add the second misalignment values included in each second target misalignment value set to obtain at least one sum of misalignment values; and determine a first preset deviation correction amount corresponding to a sum of misalignment values with a minimum absolute value among the at least one sum of misalignment values as the target deviation correction amount.

In some possible implementations, in a case that there is one first preset deviation correction amount, the determination unit is specifically configured to: determine the first preset deviation correction amount as the target deviation correction amount.

In some possible implementations, the at least one preset deviation correction amount includes at least one of the following deviation correction amounts: -0.1 mm, 0.1 mm, -0.2 mm, 0.2 mm, -0.3 mm, 0.3 mm, -0.4 mm, 0.4 mm, -0.5 mm, and 0.5 mm.

According to a third aspect, a coating deviation correction apparatus is provided, including a processor and a memory, where the memory is configured to store a computer program, and the processor is configured to invoke the computer program to execute the method in the above first aspect or any implementation thereof.

According to a fourth aspect, a computer-readable storage medium is provided, configured to store a computer program, where the computer program causes a computer to execute the method in the above first aspect or any implementation thereof.

### BRIEF DESCRIPTION OF DRAWINGS

To more clearly illustrate the technical solutions of the embodiments of this application, drawings required for use in the embodiments of this application are briefly introduced below. Obviously, the drawings described below are merely some embodiments of this application, and persons of ordinary skill in the art can obtain other drawings based on these drawings without creative effort.

In the drawings, the figures are not drawn to actual scale.
FIG. 1 is a schematic flowchart of a coating deviation correction method according to an embodiment of this application.
FIG. 2 is a schematic diagram of coating of A and B surfaces according to an embodiment of this application.
FIG. 3 is a schematic block diagram of a coating deviation correction apparatus according to an embodiment of this application.
FIG. 4 is a schematic block diagram of a coating deviation correction apparatus according to an embodiment of this application.

### DESCRIPTION OF EMBODIMENTS

Implementations of this application are further described in detail below with reference to drawings and embodiments. The detailed description of the following embodiments and the drawings are used to exemplarily illustrate principles of this application but cannot be used to limit the scope of this application, meaning that this application is not limited to the described embodiments.

In the description of this application, it should be noted that unless otherwise stated, "a plurality of" means at least two; and orientations or positional relationships indicated by terms "upper", "lower", "left", "right", "inside", "outside", and the like are merely for ease and brevity of description of this application rather than indicating or implying that means or components mentioned must have specific orientations or must be constructed or manipulated according to particular orientations. These terms shall therefore not be construed as limitations on this application. In addition, terms "first", "second", "third", and the like are merely for the purpose of description and shall not be understood as any indication or implication of relative importance.

Unless otherwise defined, all technical and scientific terms used in this application have the same meanings as commonly understood by persons skilled in the technical field to which this application pertains; terms used in the specification of this application are merely for the purpose of describing specific embodiments and are not intended to limit this application; terms "include" and "comprise", and any variations thereof in the specification, claims, and the above description of drawings of this application are intended to cover non-exclusive inclusion. In the specification, claims, or accompanying drawings of this application, terms "first", "second", and the like are intended to distinguish between different objects rather than to describe a particular order or a primary-secondary relationship.

Reference to "embodiment" in this application means that a specific feature, structure, or characteristic described in connection with the embodiment may be included in at least one embodiment of this application. Appearance of this phrase in various locations in the specification does not necessarily refer to the same embodiment, nor is it an independent or alternative embodiment mutually exclusive with other embodiments. It is explicitly or implicitly understood by persons skilled in the art that the embodiments described in this application may be combined with other embodiments.

With development of new energy technologies, application fields of batteries are becoming increasingly broad. For example, a battery may serve as a main power source for an electrical device (such as a vehicle, a ship, or a spacecraft). It should be understood that the battery mentioned in embodiments of this application refers to a single physical module including one or more battery cells to provide higher voltage and capacity.

Optionally, the battery may be a power storage battery. In terms of battery type, the battery may be a lithium-ion battery, a lithium metal battery, a lead-acid battery, a nickel-cadmium battery, a nickel-metal hydride battery, a lithium-sulfur battery, a lithium-air battery, or a sodium-ion battery, and is not specifically limited in embodiments of this application. In terms of battery scale, the battery in the embodiments of this application may be a cell or a battery cell, or may be a battery module or a battery pack. This is not specifically limited in the embodiments of this application.

The production process of batteries is relatively complex, involving a plurality of procedures, such as a mixing procedure, a coating procedure, a rolling procedure, a die-cutting and slitting procedure, a winding procedure, an electrolyte injection procedure, and a formation procedure, where the coating procedure is an indispensable part, and the influence of the coating procedure on battery performance is crucial, and the stability, uniformity, and size of the coating all affect the final performance of the battery. of the dimensions of the coating on A and B surfaces, including a positional size, a width size, and a misalignment size between the A and B surfaces, have a significant impact on the battery performance.

During the coating process, due to factors such as a nozzle pressure of a coating die, deviations may occur in a coating result of an electrode plate. When the misalignment amount between A and B surfaces of a coating region of the electrode plate exceeds a certain range, if the misalignment is not detected and corrected in time, the battery performance may be severely affected, significantly increasing the product defect rate and manufacturing costs.

Based on this, an embodiment of this application proposes a coating deviation correction method, which includes acquiring a first distance and a second distance and determining a target deviation correction amount in a coating process based on the first distance, the second distance, and at least one preset deviation correction amount, where the first distance is a distance from an edge of a coating region on a first surface of an electrode plate substrate to a reference edge, and the second distance is a distance from an edge of a coating region on a second surface of the electrode plate substrate to the reference edge. In this way, by acquiring the distances from the edges of the coating regions on the two corresponding surfaces of the electrode plate substrate to the reference edge, a coating misalignment size between the two corresponding surfaces can be determined, and then a target deviation correction amount in the coating process is determined based on the preset deviation correction amount, so that the target deviation correction amount is determined with high efficiency and accuracy. Performing deviation correction based on the target deviation correction amount ensures that the coating misalignment size between the two corresponding surfaces falls within a specification range, thereby effectively improving the battery performance.

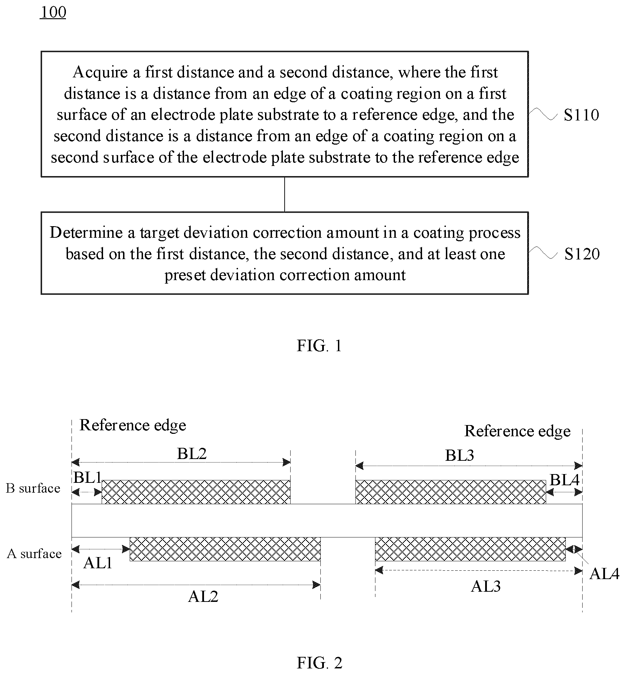

FIG. 1 shows a schematic flowchart of a coating deviation correction method 100 according to an embodiment of this application. As shown in FIG. 1, the method 100 may include at least part of the following content.

S110: Acquire a first distance and a second distance, where the first distance is a distance from an edge of a coating region on a first surface of an electrode plate substrate to a reference edge, and the second distance is a distance from an edge of a coating region on a second surface of the electrode plate substrate to the reference edge.

S120: Determine a target deviation correction amount in a coating process based on the first distance, the second distance, and at least one preset deviation correction amount.

In this embodiment of this application, the distances from the edges of the coating regions on the two corresponding surfaces of the electrode plate substrate to the reference edge can be acquired to determine the coating misalignment size between the two corresponding surfaces, and then the target deviation correction amount in the coating process is determined based on the preset deviation correction amount, so that the target deviation correction amount is determined with high efficiency and accuracy. Performing deviation correction based on the target deviation correction amount ensures that the coating misalignment size between the two corresponding surfaces falls within a specification range, thereby effectively improving the battery performance.

The electrode plate substrate may, for example, include aluminum foil, and an electrode plate obtained based on this electrode plate substrate is a positive electrode plate. Alternatively, the electrode plate substrate may, for example, include copper foil, and an electrode plate obtained based on this electrode plate substrate is a negative electrode plate.

The coating region is a region coated with slurry. The first surface may be one of surfaces of an electrode plate substrate coated with slurry, which may be a front surface of the electrode plate substrate or a back surface of the electrode plate substrate. The second surface may be a surface of the electrode plate substrate corresponding to the first surface. For example, if the first surface is the front surface of the electrode plate substrate, the second surface is the back surface of the electrode plate substrate; and if the first surface is the back surface of the electrode plate substrate, the second surface is the front surface of the electrode plate substrate.

The edge of the coating region may refer to an edge of the coating region along a length direction. It should be understood that the length direction may also be referred to as a machine direction (machine direction, MD) of an electrode plate.

The slurry may also be referred to as an active material. If the electrode plate substrate includes aluminum foil, the slurry may include lithium cobalt oxide, lithium iron phosphate, ternary lithium, lithium manganate, or the like. If the electrode plate substrate includes copper foil, the slurry may include carbon, silicon, or the like.

The reference edge may be an edge of the electrode plate substrate along the length direction, and this edge may be any one of two edges or both edges. Alternatively, the reference edge may also be an edge manually set by a user.

Optionally, manual measurement may be performed. For example, a flexible ruler is used to acquire a first distance and a second distance.

Alternatively, an imaging device, such as a charge coupled device (charge coupled device, CCD) vision system, may be used to acquire a first distance and a second distance. This significantly improves efficiency and accuracy of acquiring the first distance and the second distance.

Optionally, the first distance and the second distance may be acquired in real time. Alternatively, the first distance and the second distance may be acquired periodically. For example, the first distance and the second distance are acquired every 5 mm. Alternatively, the first distance and the second distance may be acquired randomly.

Optionally, deviation correction may be performed on the electrode plate substrate, meaning that the target deviation correction amount is a deviation correction amount for the electrode plate substrate.

Optionally, deviation correction may be performed on a coating die, meaning that the target deviation correction amount is a deviation correction amount for the coating die.

In some embodiments, S120 may specifically include: determining a first misalignment value set based on the first distance and the second distance, and determining a target deviation correction amount based on a first misalignment value and at least one preset deviation correction amount. The first misalignment value set includes, in a width direction of the electrode plate substrate, at least one first misalignment value between the edge of the coating region on the first surface and the edge of the coating region on the corresponding second surface.

In this technical solution, determining the misalignment value between the two corresponding surfaces based on the first distance and the second distance is simple to implement and effectively reduces implementation complexity. Further, the target deviation correction amount can be determined based on the misalignment value between the two corresponding surfaces and the preset deviation correction amount to determine the target deviation correction amount with high efficiency and accuracy. Performing deviation correction based on the target deviation correction amount ensures that a coating misalignment size between the two corresponding surfaces falls within a specification range, thereby effectively improving the battery performance.

The width direction of the electrode plate substrate may also be referred to as a transverse direction (transverse direction, TD).

There may be a plurality of first distances, and correspondingly, there may be a plurality of second distances, so there may be a plurality of first misalignment values, and the number of the first misalignment values is equal to the number of the first distances and second distances.

The preset deviation correction amount may be determined based on at least one of the following parameters: national standards, company standards, industry standards, a maximum allowable misalignment amount of coating of A and B surface of an electrode plate in battery manufacturing, empirical values, and on-site manufacturing requirements.

Typically, in a normal production and manufacturing process, the range of the first misalignment value may be between -1 mm and 1 mm. Excessive deviation correction may lead to a possibility of breakage of the electrode plate substrate. Furthermore, during a deviation correction process, a deviation correction precision is typically 0.1 mm. Therefore, in this embodiment of this application, the at least one preset deviation correction amount may include at least one of the following deviation correction amounts: -0.1 mm, 0.1 mm, -0.2 mm, 0.2 mm, -0.3 mm, 0.3 mm, -0.4 mm, 0.4 mm, -0.5 mm, and 0.5 mm.

It should be noted that the "+" and "-" in the preset deviation correction amount are not particularly limited in this embodiment of this application. If "+" indicates deviation correction toward a first direction along a TD direction, such as toward the left, "-" indicates deviation correction in a direction opposite to the first direction along the TD direction, such as toward the right. If "+" indicates deviation correction toward a direction opposite to the first direction along the TD direction, such as toward the right, "-" indicates deviation correction toward the first direction along the TD direction, such as toward the left.

In the above technical solution, setting the at least one preset deviation correction amount to at least one of -0.1 mm, 0.1 mm, -0.2 mm, 0.2 mm, -0.3 mm, 0.3 mm, -0.4 mm, 0.4 mm, -0.5 mm, and 0.5 mm ensures that coating misalignment between the A and B surfaces can be corrected to be within a specification range, also meets the deviation correction precision of the deviation correction mechanism, and reduces a possibility of breakage of the electrode plate substrate.

FIG. 2 is a schematic diagram of coating of A and B surfaces. FIG. 2 shows a one-out-of-four material, so the first misalignment value includes four misalignment values. In addition to the one-out-of-four material, generally, a coating production line may alternatively include a one-out-of-two material, a one-out-of-six material, a one-out-of-eight material, a one-out-of-ten material, and a one-out-of-twelve material.

As can be seen from FIG. 2, the first distances on the A surface are AL1, AL2, AL3, and AL4, respectively, and the corresponding second distances on the B surface are BL1, BL2, BL3, and BL4, respectively, so the first misalignment value set includes four first misalignment values, namely a = AL1 - BL1, b = AL2 - BL2, c = AL3 - BL3, and d = AL4 - BL4.

Further, in this embodiment of this application, the determining a target deviation correction amount based on the first misalignment value and at least one preset deviation correction amount may include: performing initial deviation correction on the first misalignment value sequentially using the at least one preset deviation correction amount to obtain at least one second misalignment value set, where each of the at least one second misalignment value set is a misalignment value set obtained after performing initial deviation correction on the first misalignment value using a same preset deviation correction amount, and the number of the at least one second misalignment value set is equal to the number of the at least one preset deviation correction amount; and then determining the target deviation correction amount based on the at least one second misalignment value set, the at least one preset deviation correction amount, and the first misalignment value.

In this technical solution, the performing initial deviation correction on the misalignment value between the two corresponding surfaces using the preset deviation correction amount and then determining the final target deviation correction amount based on the result of the initial deviation correction helps to eliminate inappropriate preset deviation correction amounts, reducing a computational effort required to determine the target deviation correction amount, and thus improving the efficiency of determining the target deviation correction amount and performing deviation correction.

Each of the at least one second misalignment value set may include at least one second misalignment value, and the number of the at least one second misalignment value included in each second misalignment value set is equal to the number of the first misalignment values.

For example, it is assumed that at least one preset deviation correction amount includes x1, x2, x3, x4, x5, x6, x7, x8, x9, and x10. First, initial deviation correction is performed on a, b, c, and d using x1 to obtain a 1st second misalignment value set, where the 1st second misalignment value set includes four second misalignment values, namely (a + x1), (b + x1), (c + x1), and (d + x1). Then, initial deviation correction is performed on a, b, c, and d using x2 to obtain a 2nd second misalignment value set, where the 2nd second misalignment value set includes four second misalignment values, namely (a + x2), (b + x2), (c + x2), (d + x2), ..., until ultimately initial deviation correction is performed on a, b, c, and d using x10 to obtain a 10th second misalignment value set, where the tenth second misalignment value set includes four second misalignment values, namely (a + x10), (b + x10), (c + x10), and (d + x10).

Further, the determining a target deviation correction amount based on at least one second misalignment value set, at least one preset deviation correction amount, and a first misalignment value may include: selecting a second misalignment value with a maximum absolute value from each of the at least one second misalignment value set; then determining a second target misalignment value, where the second target misalignment value is a misalignment value less than a first target misalignment value among at least one second misalignment value with a maximum absolute value, and the first target misalignment value is a misalignment value with a maximum absolute value in the first misalignment value set; and then determining the target deviation correction amount based on a first preset deviation correction amount among the at least one preset deviation correction amount, where the first preset deviation correction amount includes a preset deviation correction amount corresponding to the second target misalignment value.

Since in the deviation correction process, if the absolute value of the misalignment value after deviation correction is performed using a certain deviation correction amount is greater than that before deviation correction, meaning that deviation increases, and the deviation correction amount is inappropriate. Therefore, in the above technical solution, a misalignment value with an absolute value less than the misalignment value before deviation correction is selected from misalignment values after initial deviation correction and the target deviation correction amount is determined based on the deviation correction amount corresponding to the selected misalignment value, that is, the inappropriate deviation correction amounts are abandoned. This not only reduces a possibility of increasing deviation but also potentially reduces the number of the appropriate deviation correction amounts selected compared to an initially preset number, effectively reducing time for determining the target deviation correction amount and improving the efficiency.

For another example, a second misalignment value with a maximum absolute value is selected from the 1st second misalignment value set, that is, h1 = max(|a + x1|, |b + x1|, |c + x1|, |d + x1|); a second misalignment value with a maximum absolute value is selected from the 2nd second misalignment value set, that is, h2 = max(|a + x2|, |b + x2|, |c + x2|, |d + x2|), ...; and a second misalignment value with a maximum absolute value is selected from the 10th second misalignment value set, that is, h10 = max(|a + x10|, |b + x10|, |c + x10|, |d + x10|).

In addition, a misalignment value with a maximum absolute value is selected from the first misalignment value set, and defined as a first target misalignment value, that is, the first target misalignment value f = max(|a|, |b|, |c|, |d|).

Then, misalignment values less than f are selected from h1, h2, h3, ..., and h10. Assuming that h1, h3, h6, and h8 are less than f, the preset deviation correction amounts corresponding to h1, h3, h6, and h8 are x1, x3, x6, and x8, respectively, and x1, x3, x6, and x8 are collectively referred to as the first preset deviation correction amounts.

There may be one or a plurality of first preset deviation correction amounts.

In a case that there is one first preset deviation correction amount, the first preset deviation correction amount may be determined as the target deviation correction amount.

In the above technical solution, in the case that there is one first preset deviation correction amount, determining the first preset deviation correction amount as the target deviation correction amount not only significantly reduces computational complexity but also results in high accuracy of the determined target deviation correction amount.

In a case that there are a plurality of first preset deviation correction amounts, a misalignment value set obtained after performing initial deviation correction on a first misalignment value using a first preset deviation correction amount may be selected from a second misalignment value set to obtain at least one second target misalignment value set; and then a target deviation correction amount is determined based on second misalignment values included in each of the at least one second target misalignment value set.

In this technical solution, determining the target deviation correction amount based on corrected misalignment values obtained after performing initial deviation correction on the misalignment value between the two surfaces using an appropriate deviation correction amount significantly improves accuracy of the determined target deviation correction amount.

For another example, the 1st second target misalignment value set includes misalignment values obtained after performing initial deviation correction on a, b, c, and d using x1, to be specific, the first second target misalignment value set includes misalignment values a1, b1, c1, and d1, where a1 = a + x1, b1 = b + x1, c1 = c + x1, and d1 = d + x1. The 2nd second target misalignment value set includes misalignment values obtained after performing initial deviation correction on a, b, c, and d using x3, to be specific, the 2nd second target misalignment value set includes misalignment values a2, b2, c2, and d2, where a2 = a + x3, b2 = b + x3, c2 = c + x3, and d2 = d + x3. A 3rd second target misalignment value set includes misalignment values obtained after performing initial deviation correction on a, b, c, and d using x6, to be specific, the 3rd second target misalignment value set includes misalignment values a3, b3, c3, and d3, where a3 = a + x6, b3 = b + x6, c3 = c + x6, and d3 = d + x6. A 4th second target misalignment value set includes misalignment values obtained after performing initial deviation correction on a, b, c, and d using x8, to be specific, the 4th second target misalignment value set includes four misalignment values a4, b4, c4, and d4, where a4 = a + x8, b4 = b + x8, c4 = c + x8, and d4 = d + x8.

Then, the second misalignment values included in each second target misalignment value set are added to obtain at least one sum of misalignment values, and a first preset deviation correction amount corresponding to a sum of misalignment values with a minimum absolute value among the at least one sum of misalignment values is determined as the target deviation correction amount.

In the above technical solution, according to a rule that a corrected value approaches 0, meaning that a smaller sum is better, a preset deviation correction amount corresponding to a sum of misalignment values with a minimum absolute value among the sums of misalignment values is determined as a target deviation correction amount, allowing for high accuracy of the determined target deviation correction amount and achieving a good effect after deviation correction performed based on the target deviation correction amount, thereby further improving the battery performance.

Specifically, the second misalignment values in each second target misalignment value set are added to obtain four sums of misalignment values are obtained, which are respectively y1 = a1 + b1 + c1 + d1, y2 = a2 + b2 + c2 + d2, y3 = a3 + b3 + c3 + d3, and y4 = a4 + b4 + c4 + d4.

Then, the target deviation correction amount may be determined based on the four sums of misalignment values.

In an example, a first preset deviation correction amount corresponding to a sum of misalignment values with a minimum absolute value among the four sums of misalignment values may be determined as the target deviation correction amount. For example, if min(|y1|, |y2|, |y3|, |y4|) = y2,the target deviation correction amount is x3.

In another example, the four sums of misalignment values may be averaged, and a first preset deviation correction amount corresponding to an average number with a minimum absolute value among the average numbers is the target deviation correction amount.

After the target deviation correction amount is determined, the electrode plate substrate or coating die may be adjusted based on the target deviation correction amount to ensure that the coating misalignment between the A and B surfaces falls within a specification range.

The following describes a solution of the embodiments of this application using specific examples.

It is assumed that the first misalignment value set includes 4 first misalignment values, namely 0.05 mm, 0.2 mm, 0.15 mm, and -0.5 mm, and the preset deviation correction amounts include -0.1 mm, 0.1 mm, -0.2 mm, 0.2 mm, -0.3 mm, 0.3 mm, -0.4 mm, 0.4 mm, -0.5 mm, and 0.5 mm.

First, deviation correction is performed on the four first misalignment values sequentially using the ten preset deviation correction amounts, and a second misalignment value with a maximum absolute value is selected from each obtained second misalignment value set.

Specifically, after deviation correction is performed on the four first misalignment values using -0.1 mm, a 1st second misalignment value set k1 = (-0.05 mm, 0.1 mm, 0.05 mm, - 0.6 mm) is obtained, and h1 = max(|-0.05 mm|, |0.1 mm|, |0.05 mm|, |-0.6 mm|) = 0.6 mm.

After deviation correction is performed on the four first misalignment values using 0.1 mm, a 2nd second misalignment value set k2 = (0.15 mm, 0.3 mm, 0.25 mm, -0.4 mm) is obtained, and h2 = max(|0.15 mm|, |0.3 mm|, |0.25 mm|, |-0.4 mm|) = 0.4 mm.

After deviation correction is performed on the four first misalignment values using - 0.2 mm, a 3rd second misalignment value set k3 = (-0.15 mm, 0 mm, -0.05 mm, -0.7 mm) is obtained, and h3 = max(|-0.15 mm|, |0 mm|, |-0.05 mm|, |-0.7 mm|) = 0.7 mm.

After deviation correction is performed on the four first misalignment values using 0.2 mm, a 4th second misalignment value set k4 = (0.25 mm, 0.4 mm, 0.35 mm, -0.3 mm) is obtained, and h4 = max(|0.25 mm|, |0.4 mm|, |0.35 mm|, |-0.3 mm|) = 0.4 mm.

After deviation correction is performed on the four first misalignment values using - 0.3 mm, a 5th second misalignment value set k5 = (-0.25 mm, -0.1 mm, -0.15 mm, -0.8 mm) is obtained, and h5 = max(|-0.25 mm|, |-0.1 mm|, |-0.15 mm|, |-0.8 mm|) = 0.8 mm.

After deviation correction is performed on the four first misalignment values using 0.3 mm, a 6th second misalignment value set k6 = (0.35 mm, 0.5 mm, 0.45 mm, -0.2 mm) is obtained, and h6 = max(|0.35 mm|, |0.5 mm|, |-0.45 mm|, |-0.2 mm|) = 0.5 mm.

After deviation correction is performed on the four first misalignment values using - 0.4 mm, a 7th second misalignment value set k7 = (-0.35 mm, -0.2 mm, -0.25 mm, -0.9 mm) is obtained, and h7 = max(|-0.35 mm|, |-0.2 mm|, |-0.25 mm|, |-0.9 mm|) = 0.9 mm.

After deviation correction is performed on the four first misalignment values using 0.4 mm, an 8th second misalignment value set k8 = (0.45 mm, 0.6 mm, 0.55 mm, -0.1 mm) is obtained, and h8 = max(|0.45 mm|, |0.6 mm|, |0.55 mm|, |-0.1 mm|) = 0.6 mm.

After deviation correction is performed on the four first misalignment values using - 0.5 mm, a 9th second misalignment value set k9 = (-0.45 mm, -0.3 mm, -0.35 mm, -1 mm) is obtained, and h9 = max(|-0.45 mm|, |-0.3 mm|, |-0.35 mm|, |-1 mm|) = 1 mm.

After deviation correction is performed on the four first misalignment values using 0.5 mm, a 10th second misalignment value set k10 = (0.55 mm, 0.7 mm, 0.65 mm, 0 mm) is obtained, and h10 = max(|-0.55 mm|, |0.7 mm|, |0.65 mm|, |0 mm|) = 0.7 mm.

Subsequently, a first target misalignment value in the first misalignment value set f = max(|0.05 mm|, |0.2 mm|, |0.15 mm|, |-0.5 mm|) = 0.5 mm is determined

It can be seen that h1, h3, h5, h7, h8, h9, and h10 are all greater than f, indicating that deviation correction performed using preset deviation correction amounts of -0.1 mm, -0.2 mm, - 0.3 mm, -0.4 mm, 0.4 mm, -0.5 mm, and 0.5 mm corresponding to h1, h3, h5, h7, h8, h9, and h10 increases deviation, and results in a larger coating misalignment size between the A and B surfaces than that before deviation correction. Therefore, the preset deviation correction amounts of -0.1 mm, -0.2 mm, -0.3 mm, -0.4 mm, 0.4 mm, -0.5 mm, and 0.5 mm corresponding to h1, h3, h5, h7, h8, h9, and h10 are abandoned, while the preset deviation correction amounts of 0.1 mm, 0.2 mm, and 0.3 mm corresponding to h2, h4, and h6 meet the requirements.

The second misalignment values obtained after deviation correction is performed on the four first misalignment values using 0.1 mm are 0.15 mm, 0.3 mm, 0.25 mm, and -0.4 mm, which are added to obtain a sum y1 = 0.3 mm. The second misalignment values obtained after deviation correction is performed on the four first misalignment values using 0.2 mm are 0.25 mm, 0.4 mm, 0.35 mm, and -0.3 mm, which are added to obtain a sum y2 = 0.7 mm. The second misalignment values obtained after deviation correction is performed on the four first misalignment values using 0.3 mm are 0.35 mm, 0.5 mm, 0.45 mm, and -0.2 mm, which are added to obtain a sum y3 = 1.1 mm.

According to the rule that a corrected value approaches 0, meaning that a smaller sum is better, the target deviation correction amount is ultimately determined as 0.1 mm.

In the embodiments of this application, the sequence numbers of the processes described above do not imply an order of execution, and the execution order of each process should be determined based on its function and internal logic, without constituting any limitation on the implementation process of the embodiments of this application.

Furthermore, without conflict, the various embodiments and/or technical features in the various embodiments described in this application may be arbitrarily combined with each other, and technical solutions obtained after combination should also fall within the scope of this application.

The coating deviation correction method according to the embodiments of this application has been described in detail above, and a coating deviation correction apparatus according to the embodiments of this application is described below. It should be understood that the coating deviation correction apparatus in the embodiments of this application can perform the coating deviation correction method in the embodiments of this application.

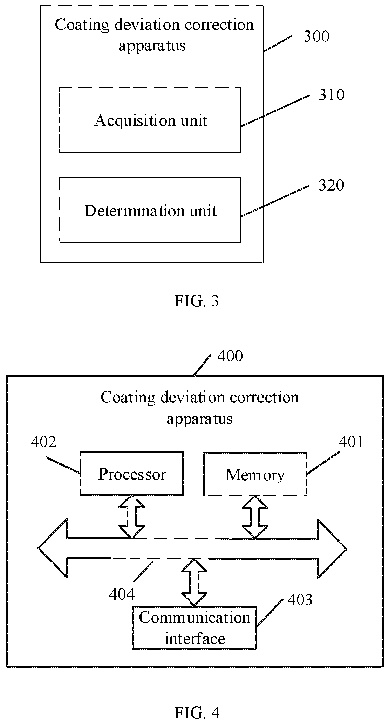

FIG. 3 shows a schematic block diagram of a coating deviation correction apparatus 300 according to an embodiment of this application. As shown in FIG. 3, the coating deviation correction apparatus 300 may include: an acquisition unit 310 configured to acquire a first distance and a second distance, where the first distance is a distance from an edge of a coating region on a first surface of an electrode plate substrate to a reference edge, and the second distance is a distance from an edge of a coating region on a second surface of the electrode plate substrate to the reference edge; and
a determination unit 320 configured to determine a target deviation correction amount in a coating process based on the first distance, the second distance, and at least one preset deviation correction amount.

Optionally, in this embodiment of this application, the determination unit 320 is specifically configured to: determine a first misalignment value set based on the first distance and the second distance, where the first misalignment value set includes, in a width direction of an electrode plate substrate, at least one first misalignment value between the edge of the coating region on the first surface and the edge of the coating region on the corresponding second surface; and determine a target deviation correction amount based on a first misalignment value and at least one preset deviation correction amount.

Optionally, in this embodiment of this application, the coating deviation correction apparatus 300 may further include: a deviation correction unit configured to perform initial deviation correction on the first misalignment value sequentially using at least one preset deviation correction amount to obtain at least one second misalignment value set, where each of the at least one second misalignment value set is a misalignment value set obtained after performing initial deviation correction on the first misalignment value using a same preset deviation correction amount, and the number of the at least one second misalignment value set is equal to the number of the at least one preset deviation correction amount. The determination unit 320 is specifically configured to: determine a target deviation correction amount based on the at least one second misalignment value set, the at least one preset deviation correction amount, and the first misalignment value.

Optionally, in this embodiment of this application, each of the at least one second misalignment value set includes at least one second misalignment value, and the coating deviation correction apparatus 300 may further include: a selection unit configured to select a second misalignment value with a maximum absolute value from each of the at least one second misalignment value set. The determination unit 320 is specifically configured to: determine a second target misalignment value, where the second target misalignment value is a misalignment value less than a first target misalignment value among at least one second misalignment value with a maximum absolute value, and the first target misalignment value is a misalignment value with a maximum absolute value in a first misalignment value set; and determine a target deviation correction amount based on a first preset deviation correction amount among at least one preset deviation correction amount, where the first preset deviation correction amount includes a preset deviation correction amount corresponding to the second target misalignment value.

Optionally, in this embodiment of this application, in a case that there are a plurality of first preset deviation correction amounts, the selection unit is specifically configured to: select, from a second misalignment value set, a misalignment value set obtained after performing initial deviation correction on a first misalignment value using a first preset deviation correction amount to obtain at least one second target misalignment value set; and the determination unit 320 is specifically configured to: determine a target deviation correction amount based on second misalignment values included in each of the at least one second target misalignment value set.

Optionally, in this embodiment of this application, the determination unit 320 is specifically configured to: add the second misalignment values included in each second target misalignment value set to obtain at least one sum of misalignment values; and determine the first preset deviation correction amount corresponding to a sum of misalignment values with a minimum absolute value among the at least one sum of misalignment values as a target deviation correction amount.

Optionally, in this embodiment of this application, in a case that there is one first preset deviation correction amount, the determination unit 320 is specifically configured to: determine the first preset deviation correction amount as the target deviation correction amount.

Optionally, in this embodiment of this application, at least one preset deviation correction amount includes at least one of the following deviation correction amounts: -0.1 mm, 0.1 mm, -0.2 mm, 0.2 mm, -0.3 mm, 0.3 mm, -0.4 mm, 0.4 mm, -0.5 mm, and 0.5 mm.

It should be understood that the coating deviation correction apparatus 300 can implement corresponding operations in the method 100, and for brevity, details are not described herein again.

FIG. 4 is a schematic diagram of a hardware structure of a coating deviation correction apparatus 400 according to an embodiment of this application. The coating deviation correction apparatus 400 includes a memory 401, a processor 402, a communication interface 403, and a bus 404. The memory 401, the processor 402, and the communication interface 403 implement a communication connection to each other by using the bus 404.

The memory 401 may be a read-only memory (read-only memory, ROM), a static storage device, a random access memory (random access memory, RAM), or the like. The memory 401 may store a program, and when the program stored in the memory 401 is executed by the processor 402, the processor 402 and the communication interface 403 are configured to execute each step of the coating deviation correction method according to the embodiments of this application.

The processor 402 may adopt a general-purpose central processing unit (central processing unit, CPU), a microprocessor, an application specific integrated circuit (application specific integrated circuit, ASIC), a graphics processing unit (graphics processing unit, GPU), or one or more integrated circuits, and is configured to execute related programs to implement functions to be performed by units in the apparatus according to the embodiments of this application, or to execute the coating deviation correction method according to the embodiments of this application.

The processor 402 may alternatively be an integrated circuit chip with a signal processing capability. In an implementation process, each step of the coating deviation correction method according to the embodiments of this application may be completed by an integrated logic circuit of hardware or instructions in a form of software in the processor 402.

The foregoing processor 402 may alternatively be a general-purpose processor, a digital signal processor (digital signal processor, DSP), an ASIC, a field programmable gate array (field programmable gate array, FPGA) or another programmable logic device, a discrete gate or transistor logic device, or a discrete hardware component. Methods, steps, and logical block diagrams disclosed in the embodiments of this application can be implemented or executed. The general-purpose processor may be a microprocessor or any conventional processor. Steps of the method disclosed with reference to the embodiments of this application may be directly implemented by a hardware processor, or may be implemented by a combination of hardware and a software module in a processor. The software module may be located in a storage medium mature in the art, such as a random access memory, a flash memory, a read-only memory, a programmable read-only memory or electrically erasable programmable memory, or a register. The storage medium is located in the memory 401, and the processor 402 reads information in the memory 401 and completes, in combination with its hardware, functions to be performed by units included in the coating deviation correction apparatus 400 according to the embodiments of this application, or executes the coating deviation correction method according to the embodiments of this application.

The communication interface 403 uses a transceiver device such as, but not limited to, a transceiver to implement communication between the coating deviation correction apparatus 400 and other devices or communication networks.

The bus 404 may include a channel for transmitting information between various components (for example, the memory 401, the processor 402, and the communication interface 403) of the coating deviation correction apparatus 400.

It should be noted that, although only the memory, the processor, and the communication interface are shown in the coating deviation correction apparatus 400 described above, in a specific implementation process, persons skilled in the art should understand that the coating deviation correction apparatus 400 may also include other devices necessary for normal operation. In addition, according to specific needs, persons skilled in the art should understand that the coating deviation correction apparatus 400 may also include hardware devices for implementing other additional functions. Furthermore, persons skilled in the art should understand that the coating deviation correction apparatus 400 may also include only devices necessary to implement the embodiments of this application, without necessarily including all devices shown in FIG. 4.

An embodiment of this application further provides a computer-readable storage medium configured to store a computer program, where the computer program is configured to execute the methods according to the various embodiments of this application described above.

The foregoing computer-readable storage medium may be a transitory computer-readable storage medium or a non-transitory computer-readable storage medium.

An embodiment of this application further provides a computer program product, where the computer program product includes a computer program stored on a computer-readable storage medium, the computer program includes program instructions, and when the program instructions are executed by a computer, the computer executes the coating deviation correction method described above.

In conclusion, it should be noted that the above embodiments are only used to illustrate rather than to limit the technical solutions of this application. Although this application has been described in detail with reference to the foregoing embodiments, persons of ordinary skill in the art should understand that modifications can still be made to technical solutions recorded in the foregoing embodiments, or equivalent replacements can be made to some technical features, but these modifications or replacements do not cause an essence of corresponding technical solutions to depart from the scope of the technical solutions of the embodiments of this application.

## Claims

1. A coating deviation correction method, comprising:
acquiring a first distance and a second distance, wherein the first distance is a distance from an edge of a coating region on a first surface of an electrode plate substrate to a reference edge, and the second distance is a distance from an edge of a coating region on a second surface of the electrode plate substrate to the reference edge; and
determining a target deviation correction amount in a coating process based on the first distance, the second distance, and at least one preset deviation correction amount.

2. The method according to claim 1, wherein the determining a target deviation correction amount in a coating process based on the first distance, the second distance, and at least one preset deviation correction amount comprises:
determining a first misalignment value set based on the first distance and the second distance, wherein the first misalignment value set comprises, in a width direction of the electrode plate substrate, at least one first misalignment value between the edge of the coating region on the first surface and the edge of the coating region on the corresponding second surface; and
determining the target deviation correction amount based on the first misalignment value and the at least one preset deviation correction amount.

3. The method according to claim 2, wherein the determining the target deviation correction amount based on the first misalignment value and the at least one preset deviation correction amount comprises:
performing initial deviation correction on the first misalignment value sequentially using the at least one preset deviation correction amount to obtain at least one second misalignment value set, wherein each of the at least one second misalignment value set is a misalignment value set obtained after performing initial deviation correction on the first misalignment value using a same preset deviation correction amount, and the number of the at least one second misalignment value set is equal to the number of the at least one preset deviation correction amount; and
determining the target deviation correction amount based on the at least one second misalignment value set, the at least one preset deviation correction amount, and the first misalignment value.

4. The method according to claim 3, wherein each of the at least one second misalignment value set comprises at least one second misalignment value, and the determining the target deviation correction amount based on the at least one second misalignment value set, the at least one preset deviation correction amount, and the first misalignment value comprises:
selecting a second misalignment value with a maximum absolute value from each of the at least one second misalignment value set;
determining a second target misalignment value, wherein the second target misalignment value is a misalignment value less than a first target misalignment value among at least one second misalignment value with a maximum absolute value, and the first target misalignment value is a misalignment value with a maximum absolute value in the first misalignment value set; and
determining the target deviation correction amount based on a first preset deviation correction amount among the at least one preset deviation correction amount, wherein the first preset deviation correction amount comprises a preset deviation correction amount corresponding to the second target misalignment value.

5. The method according to claim 4, wherein, in a case that there are a plurality of first preset deviation correction amounts, the determining the target deviation correction amount based on a first preset deviation correction amount among the at least one preset deviation correction amount comprises:
selecting, from the second misalignment value set, a misalignment value set obtained after performing initial deviation correction on the first misalignment value using the first preset deviation correction amount to obtain at least one second target misalignment value set; and
determining the target deviation correction amount based on second misalignment values comprised in each of the at least one second target misalignment value set.

6. The method according to claim 5, wherein the determining the target deviation correction amount based on second misalignment values comprised in each of the at least one second target misalignment value set comprises:
adding the second misalignment values comprised in each second target misalignment value set to obtain at least one sum of misalignment values; and
determining a first preset deviation correction amount corresponding to a sum of misalignment values with a minimum absolute value among the at least one sum of misalignment values as the target deviation correction amount.

7. The method according to claim 4, wherein, in a case that there is one first preset deviation correction amount, the determining the target deviation correction amount based on a first preset deviation correction amount among the at least one preset deviation correction amount comprises:
determining the first preset deviation correction amount as the target deviation correction amount.

8. The method according to any one of claims 1 to 7, wherein the at least one preset deviation correction amount comprises at least one of the following deviation correction amounts: -0.1 mm, 0.1 mm, -0.2 mm, 0.2 mm, -0.3 mm, 0.3 mm, -0.4 mm, 0.4 mm, -0.5 mm, and 0.5 mm.

9. A coating deviation correction apparatus comprising:
an acquisition unit configured to acquire a first distance and a second distance, wherein the first distance is a distance from an edge of a coating region on a first surface of an electrode plate substrate to a reference edge, and the second distance is a distance from an edge of a coating region on a second surface of the electrode plate substrate to the reference edge; and
a determination unit configured to determine a target deviation correction amount in a coating process based on the first distance, the second distance, and at least one preset deviation correction amount.

10. The apparatus according to claim 9, wherein the determination unit is specifically configured to:
determine a first misalignment value set based on the first distance and the second distance, wherein the first misalignment value set comprises, in a width direction of the electrode plate substrate, at least one first misalignment value between the edge of the coating region on the first surface and the edge of the coating region on the corresponding second surface; and
determine the target deviation correction amount based on the first misalignment value and the at least one preset deviation correction amount.

11. The apparatus according to claim 10, wherein the apparatus further comprises:
a deviation correction unit configured to perform initial deviation correction on the first misalignment value sequentially using the at least one preset deviation correction amount to obtain at least one second misalignment value set, wherein each of the at least one second misalignment value set is a misalignment value set obtained after performing initial deviation correction on the first misalignment value using a same preset deviation correction amount, and the number of the at least one second misalignment value set is equal to the number of the at least one preset deviation correction amount; and
the determination unit is specifically configured to:
determine the target deviation correction amount based on the at least one second misalignment value set, the at least one preset deviation correction amount, and the first misalignment value.

12. The apparatus according to claim 11, wherein each of the at least one second misalignment value set comprises at least one second misalignment value; and the apparatus further comprises:
a selection unit configured to select a second misalignment value with a maximum absolute value from each of the at least one second misalignment value set; and
the determination unit is specifically configured to:
determine a second target misalignment value, wherein the second target misalignment value is a misalignment value less than a first target misalignment value among at least one second misalignment value with a maximum absolute value, and the first target misalignment value is a misalignment value with a maximum absolute value in the first misalignment value set; and
determine the target deviation correction amount based on a first preset deviation correction amount among the at least one preset deviation correction amount, wherein the first preset deviation correction amount comprises a preset deviation correction amount corresponding to the second target misalignment value.

13. The apparatus according to claim 12, wherein, in a case that there are a plurality of first preset deviation correction amounts, the selection unit is configured to:
select, from the second misalignment value set, a misalignment value set obtained after performing initial deviation correction on the first misalignment value using the first preset deviation correction amount to obtain at least one second target misalignment value set; and
the determination unit is specifically configured to:
determine the target deviation correction amount based on second misalignment values comprised in each of the at least one second target misalignment value set.

14. The apparatus according to claim 13, wherein the determination unit is specifically configured to:
add the second misalignment values comprised in each second target misalignment value set to obtain at least one sum of misalignment values; and
determine a first preset deviation correction amount corresponding to a sum of misalignment values with a minimum absolute value among the at least one sum of misalignment values as the target deviation correction amount.

15. The apparatus according to claim 12, wherein, in a case that there is one first preset deviation correction amount, the determination unit is specifically configured to:
determine the first preset deviation correction amount as the target deviation correction amount.

16. The apparatus according to any one of claims 9 to 15, wherein the at least one preset deviation correction amount comprises at least one of the following deviation correction amounts: -0.1 mm, 0.1 mm, -0.2 mm, 0.2 mm, -0.3 mm, 0.3 mm, -0.4 mm, 0.4 mm, -0.5 mm, and 0.5 mm.

17. A coating deviation correction apparatus, comprising:
a memory configured to store a program; and
a processor configured to execute the program stored in the memory, wherein when the program stored in the memory is executed, the processor is configured to execute the coating deviation correction method according to any one of claims 1 to 8.

18. A computer-readable storage medium configured to store a computer program, wherein the computer program causes a computer to execute the coating deviation correction method according to any one of claims 1 to 8.
